# EUROPÄISCHE PATENTSCHRIFT

(11) **EP 4 089 190 B1**
(45) Veröffentlichungstag und Bekanntmachung des Hinweises auf die Patenterteilung: **25.11.2026**
(21) Anmeldenummer: 22175307.2
(22) Anmeldetag: 16.04.2020
(51) Int. Cl.: C22C 11/06, H01M 4/68, H01M 4/84, H01M 10/12, H01M 4/73

(54) **BLEILEGIERUNG, ELEKTRODE UND AKKUMULATOR**
LEAD ALLOY, ELECTRODE AND ACCUMULATOR
ALLIAGE DE PLOMB, ÉLECTRODE ET ACCUMULATEUR

(43) Veröffentlichungstag der Anmeldung: 16.11.2022
(62) Dokumentnummer(n) der früheren Anmeldung(en) nach Art. 76 EPÜ: 20169802.4 / 3 896 180
(73) Patentinhaber: HOPPECKE Batterien GmbH & Co. KG., 59929 Brilon (DE)
(72) Erfinder: Riegel, Bernhard, 59929 Brilon (DE); Cattaneo, Eduardo, 59929 Brilon (DE)
(74) Vertreter: Brinkmann & Partner

(56) Entgegenhaltungen:
- EP-A1- 3 604 577
- EP-A1- 3 604 578
- CN-A- 109 402 419
- JP-A- 2003 221 633
- US-B1- 6 180 286

## Beschreibung

Die Erfindung betrifft eine Bleilegierung, insbesondere Elektrodengitterlegierung, Verwendungen für die erfindungsgemäßen Bleilegierungen, eine Elektrode aufweisend ein Elektrodengerüst wenigstens teilweise bestehend aus einer der erfindungsgemäßen Bleilegierungen sowie einen Blei-Säure-Akkumulator aufweisend eine erfindungsgemäße Elektrode.

Bleilegierungen als Material für Elektrodengerüste zum Einsatz in Blei-Säure-Akkumulatoren sind dem Grunde nach aus dem Stand der Technik bekannt. Elektroden weisen zumeist ein festes Elektrodengerüst auf, das der Aufnahme einer pastösen aktiven Elektrodenmasse dient. Das Elektrodengerüst ist dabei zumeist als Elektrodengitter ausgebildet. Aus dem Stand der Technik sind jedoch auch weitere Formen bekannt. Unabhängig von der letztendlichen Form der Elektrodengerüste spricht man mit Bezug auf die Bleilegierungen üblicherweise von Elektrodengitterlegierungen.

Bei der Wahl der Bleilegierung spielen verschiedene Faktoren eine Rolle. Zum einen ist es erforderlich, dass die Bleilegierung auf wirtschaftlich sinnvolle Weise zu Elektrodengerüsten verarbeitet werden kann. Ferner muss die Bleilegierung eine vergleichsweise gute mechanische Stabilität aufweisen, um sowohl ihr eigenes vergleichsweise hohes Gewicht und das Gewicht der Elektrodenmasse über die gesamte Lebensdauer des Akkumulators tragen zu können. Darüber hinaus ist das Elektrodengerüst bei bestimmungsgemäßem Einsatz in einem Blei-Säure-Akkumulator stets in Kontakt mit einem hochkorrosiven Elektrolyten einerseits und mit den korrosiven Bestandteilen der aktiven Elektrodenmasse andererseits. Die Bleilegierung muss daher neben den vorgenannten Eigenschaften ferner korrosionsbeständig sein.

In diesem Zusammenhang sind beispielsweise aus der US 2,860,969 A Blei-Calcium-Cer haltige Legierungen bekannt. Die Druckschrift ist mit der Überwindung der Nachteile von Blei-Antimon-Legierungen als Elektrodengittermaterial befasst. Antimon wurde in Bleilegierungen ursprünglich dafür verwendet, der Legierung mechanische Stabilität zu verleihen. Die konkret vorgeschlagene PbCaSnCe-haltige Legierung sieht als Ersatz für Antimon Calcium vor, um die notwendige mechanische Stabilität bereitzustellen und die Abscheidung von Antimon auf der negativen Platte aufgrund positiver Gitterkorrosion zu verhindern. Bekanntermaßen führt die Kontaminierung der negativen Aktivmasse durch Antimon zu erhöhtem Wasserlust durch Elektrolyse und Sulfatierung der negativen Platten.

Die Legierungskomponente Cer dient demgegenüber der Verbesserung der Korrosionseigenschaften durch Verfeinerung der Korngrößen. Gitter mit grobkörnigen Gefügen haben Stege und Rahmen bestehend aus wenigen Körnern. In diesem Fall dringt der Korrosionsangriff an Korngrenzen schnell tief in die Stegen bzw. Rahmen. Diese Art intergranularer Korrosion führt in der Regel zu frühzeitigem Gitterzerfall.

Darüber hinaus sind aus der CN 103 762 369 A Bleilegierungen mit Lanthan als Legierungskomponente zur Korngrößenverfeinerung bekannt geworden. Lanthan wird dort in Gewichtsanteilen von 0,01 bis 0,12 % eingesetzt.

US 6180286 B1, EP 3604577 A1 und CN 109402419 A offenbaren auch Bleilegierungen und die Verwendung als Elektrodenmaterial.

Elektrodengerüste aus vorgenannten Legierungen haben jedoch den Nachteil, dass sie während des bestimmungsgemäßen Betriebs zu Gitterwachstum neigen, was von einer Beeinträchtigung der positiven Gittermasseanbindung bis hin zu erheblichen Kapazitätsverlusten des Akkumulators führen kann. Das Phänomen des Gitterwachstums ist die Folge eines im Laufe der Zeit zunehmenden Mangels an Kriechfestigkeit der Gitterlegierungen. Dieser irreversible Verlust von mechanischer Festigkeit ist eine Folge von sog. "Überalterung" des Elektrodenmaterials. Unter diesen Bedingungen erzeugt die zunehmende Dicke der Korrosionsschicht eine axiale Kraft, die zu einer erheblichen Dehnung der Gitterstege und Rahmen führt.

Der Erfindung liegt damit die komplexe technische **Aufgabe** zugrunde, eine Legierung bereitzustellen, die als Material für Elektrodengerüste geeignet ist, d.h. wirtschaftlich sinnvoll in der Industrieproduktion verarbeitbar, ausreichend mechanisch stabil und korrosionsbeständig ist und darüber hinaus eine wenigstens verminderte Neigung zu Gitterwachstum während des Betriebs in einem Blei-Säure-Akkumulator aufweist.

Die Erfindung ist in den beigefügten Ansprüchen definiert.

Zur **Lösung** der Aufgabe schlägt die Erfindung eine Bleilegierung, insbesondere eine Elektrodengitterlegierung, gemäß Anspruch 1 vor.

Die erfindungsgemäße Bleilegierung zeichnet sich dabei durch die erfinderische Idee aus, dass sie die synergetische Wirkung einer Kombination aus Blei und einer im Vergleich zum Stand der Technik wesentlich geringeren Menge Lanthanoid ausnutzt, um zu einer Legierung zu gelangen, die im Vergleich zu den aus dem Stand der Technik bekannten Bleilegierungen ein vermindertes Gitterwachstum bei gleichzeitiger Korngrößenverfeinerung zeigt. Das Phänomen des Gitterwachstums tritt sowohl bei calciumhaltigen als auch bei calciumfreien Bleilegierungen auf. Es hat sich gezeigt, dass die erfindungsgemäße Lösung für beide Legierungstypen wirksam ist. Der Einsatz calciumhaltiger Legierungen ist jedoch aufgrund der vorteilhaften mechanischen Eigenschaften bevorzugt. In diesem Zusammenhang ist die Zugabe des Lanthanoids in der Legierung besonders wirksam, da insbesondere calciumhaltige Legierungen zu einem verstärkten Gitterwachstum neigen. Die Legierung weist daher einen Anteil an Calcium von wenigstens 0,06 Gew.-% auf. Der maximale Anteil an Calcium liegt wie angegeben erfindungsgemäß bei 0,08 Gew.-%.

Lanthanoide im Sinne der Erfindung sind dem Grunde nach alle zu der entsprechenden chemischen Gruppe gehörende Metalle. Als besonders wirksam haben sich jedoch die Lanthanoide Lanthan und Cer erwiesen. Erfindungsgemäß liegen beide Metalle in der Legierung als Mischung, insbesondere als La/Ce-Mischmetall vor. Das Verhältnis zwischen La und Ce im Mischmetall ist dabei vorzugsweise so gewählt, dass der Anteil an Lanthan wenigstens so hoch ist, wie der Anteil an Cer. Vorzugsweise übersteigt der Anteil an Lanthan den Anteil des Cers.

Es hat sich in diesem Zusammenhang überraschend gezeigt, dass sich durch die Wahl eines geeigneten quantitativen Anteils des Lanthanoids das Gitterwachstum einer, insbesondere calciumhaltigen, Bleilegierung im bestimmungsgemäßen Einsatz verringern lässt. Es wurde gefunden, dass sich dieser Effekt bei, insbesondere calciumhaltigen, Bleilegierungen vorzugsweise durch Lanthanoide, erfindungsgemäß Lanthan und Cer, erreichen lässt. Das Lanthanoid, insbesondere Lanthan, entfaltet in dieser speziellen Quantität eine bislang unerkannte Doppelwirkung, indem es einerseits die Korrosionsbeständigkeit durch Korngrößenverfeinerung erhöht und andererseits die, insbesondere durch die Calcium-Komponente hervorgerufene, Neigung zu Gitterwachstum inhibiert.

Erfindungsgemäß beträgt der Anteil des wenigstens einen Lanthanoids in der Legierung 0,003 Gew.-% bis 0,006 Gew.-%, besonders bevorzugt 0,0040 Gew.-% bis 0,0055 Gew.- %. Vorgenannte Gewichtsanteile bezieht sich dabei erfindungsgemäß auf eine Mischung aus Lanthan und Cer. Vorgenannte Quantitäten haben sichsowohl hinsichtlich Korngrößenverfeinerung als auch hinsichtlich Gitterwachstum als besonders vorteilhaft erwiesen. Höhere Anteile führen zu einem verstärkten Gitterwachstum. Niedrigere Anteile führen demgegenüber zu einer schlechteren Korngrößenverfeinerung. Im erfindungsgemäßen Bereich erreicht der Anteil des Lanthanoids hinsichtlich beider Effekte hingegen seine optimierte Wirkung.

Die erfindungsgemäße Bleilegierung weist gemäß der Erfindung weitere Legierungskomponenten auf. Diese Legierungskomponenten sind ausgewählt aus der Gruppe Sn, Ag und Al. Die Legierungskomponenten dienen der Verbesserung verschiedener Eigenschaften der Bleilegierung. Insbesondere dienen sie dazu, die Bleilegierung für verschiedene Verarbeitungsverfahren zu optimieren. Solche Verarbeitungsverfahren umfassen im Bereich der Gießtechnik insbesondere Fallguss, Druckguss, kontinuierlichen Guss (ConCast) und Walz-/Stanztechniken.

In Kombination mit der erfindungsgemäßen calciumhaltigen Bleilegierung haben die vorgenannten Legierungskomponenten folgende technische Effekte:
Zinn (Sn) verlangsamt die Überalterung des Gefüges, erhöht die Leitfähigkeit der Korrosionsschichten und trägt somit zur Erhöhung der Stromaufnahmefähigkeit, Zyklenfestigkeit und der Erholungsfähigkeit der Batterien nach Tiefentladungen bei. Der Gewichtsanteil von Sn in der Legierung liegt vorzugsweise bei maximal 2,0 Gew.-%. Besonders bevorzugt beträgt er von 0,2 Gew.-% bis 2,0 Gew.-%.

Silber (Ag) verbessert die Korrosionsbeständigkeit und erhöht die Kriechfestigkeit der Bleilegierungen bei hohen Temperaturen. Der Gewichtsanteil von Ag in der Legierung liegt vorzugsweise bei maximal 0,035 Gew.-%. Besonders bevorzugt beträgt er von 0,008 Gew.-% bis 0,035 Gew.-%. Es hat sich gezeigt, dass Ag in der angegebenen Quantität in Kombination mit einem Lanthanoid, insbesondere La, zu einem gegenteiligen Effekt hinsichtlich der Kriechfestigkeit der Legierung führt, sofern die Quantität des Lanthanoids den erfindungsgemäßen Bereich überschreitet. Im erfindungsgemäßen Bereich des Lanthanoids führt Ag demgegenüber weiterhin zu einer Erhöhung der Kriechfestigkeit der Legierung.

Aluminium (Al) schützt die Schmelzen im Herstellungsprozess der Bleilegierung gegen Luftoxidation. Vorzugsweise wird Al nur zusammen mit Ca oder Ba verwendet, da calcium- und/oder bariumhaltige Schmelzen im Besonderen zu Oxidation an der Luft neigen. Der Gewichtsanteil von Al in der Legierung liegt vorzugsweise bei maximal 0,012 Gew.-%. Besonders bevorzugt beträgt er von 0,003 Gew.-% bis 0,012 Gew.-%.

Die qualitativen und quantitativen Angaben hinsichtlich der Legierungszusammensetzung beziehen sich stets auf die bewusst hinzugegebenen Bestandteile. Darüber hinaus kann die Legierung Spuren weiterer Elemente enthalten, deren Aufnahme in die Legierung mit wirtschaftlich vertretbarem technischem Aufwand nicht verhindert werden kann und/oder mit wirtschaftlich vertretbarem technischem Aufwand nicht nachträglich aus der Legierung entfernt werden können. Zu diesen Spuren zählen unter anderem Sb, Cd, Fe, Zn, Cu, Te, Ni und/oder Schwefel. In der Regel liegt der Gewichtsanteil dieser Elemente jeweils bei unter 0,0005 Gew.-%.

Ferner betrifft die Erfindung die Verwendung der erfindungsgemäßen Bleilegierungen als Material für eine Elektrodenstruktur für Blei-Säure-Akkumulatoren. Bevorzugt ist die Verwendung als Material für ein Elektrodengitter. Durch die erfindungsgemäße Verwendung der Bleilegierungen kann ein für den Einsatz in einem Blei-Säure-Akkumulator geeignetes Elektrodengerüst bereitgestellt werden, dessen Lebensdauer zumindest durch eine Verringerung des Wachstumseffekts des Elektrodengerüsts im bestimmungsgemäßen Betrieb verlängert ist.

Die Bleilegierung ist durch die Wahl ihrer Komponenten vergleichsweise gut verarbeitbar, wodurch sie im Unterschied zu aus dem Stand der Technik bekannten Legierungen in verschiedensten Verfahren eingesetzt werden kann.

Darüber hinaus betrifft die Erfindung eine Elektrode für einen Blei-Säure-Akkumulator mit einem Elektrodengerüst, welches wenigstens teilweise aus wenigstens einer der erfindungsgemäßen Bleilegierungen gebildet ist. Gemäß einer bevorzugten Ausgestaltung der Erfindung ist das Elektrodengerüst vollständig aus nur einer der erfindungsgemäßen Bleilegierungen gebildet. Durch den Einsatz der erfindungsgemäßen Bleilegierungen wird die Lebensdauer der Elektrode und des Akkumulators insgesamt verbessert.

Gemäß einer bevorzugten Weiterbildung der Erfindung weist die Elektrode eine pastöse aktive Masse auf, welche von dem Elektrodengerüst aufgenommen ist. Es hat sich gezeigt, dass die erfindungsgemäßen Bleilegierungen besonders gut mit der aktiven Elektrodenmasse wechselwirken. Die Adhäsion der aktiven Elektrodenmasse am Elektrodengerüst wird somit verstärkt, wodurch die Elektrode insgesamt eine feinkörnige Mikrostruktur und eine verbesserte mechanische Stabilität, insbesondere der Duktilität, aufweist. Die Gesamtheit dieser vorteilhaften Effekte führen in synergetischer Weise zu einer Verbesserung des Lade-Entladeverhaltens der Elektrode.

Die Erfindung betrifft ferner einen Blei-Säure-Akkumulator aufweisend eine erfindungsgemäße Elektrode. Durch den Einsatz einer Elektrode mit einem Elektrodengerüst aus einer erfindungsgemäßen Bleilegierung wird die Lebensdauer des Akkumulators durch die Verringerung von Elektrodenwachstum verbessert. Es wird folglich ein Blei-Säure-Akkumulator mit vergleichsweise langer Lebensdauer bereitgestellt. Vorzugsweise ist der Blei-Säure-Akkumulator ein VRLA-Akkumulator (ventilgeregelter Blei-Säure-Akkumulator). Hierdurch ist der Akkumulator insbesondere zum Einsatz in Traktionsbatterien und stationären Anlagen geeignet.

Nachfolgend werden Beispiele für erfindungsgemäße und nicht erfindungsgemäße Legierungszusammensetzungen gegeben:

### Ausführungsbeispiel 1 (nicht erfindungsgemäß)

| | |
|---|---|
| 0,04 Gew.-% - 0,08 Gew.-% | Ca |
| 0,8 Gew.-% - 1,8 Gew.-% | Sn |
| 0,01 Gew.-% - 0,025 Gew.-% | Ag |
| 0,003 Gew.-% - 0,006 Gew.-% | La |
| Rest | Pb. |

### Ausführungsbeispiel 2 (nicht erfindungsgemäß)

| | |
|---|---|
| 0,04 Gew.-% - 0,08 Gew.-% | Ca |
| 0,8 Gew.-% - 1,8 Gew.-% | Sn |
| 0,01 Gew.-% - 0,025 Gew.-% | Ag |
| 0,003 Gew.-% - 0,006 Gew.-% | Ce |
| Rest | Pb. |

### Ausführungsbeispiel 3 (nicht erfindungsgemäß)

| | |
|---|---|
| 0,06 Gew.-% - 0,07 Gew.-% | Ca |
| 1,55 Gew.-% - 1,58 Gew.-% | Sn |
| 0,011 Gew.-% - 0,013 Gew.-% | Ag |
| 0,0034 Gew.-% - 0,0054 Gew.-% | La |
| Rest | Pb. |

### Ausführungsbeispiel 4 (nicht erfindungsgemäß)

| | |
|---|---|
| 0,06 Gew.-% - 0,07 Gew.-% | Ca |
| 1,55 Gew.-% - 1,58 Gew.-% | Sn |
| 0,011 Gew.-% - 0,013 Gew.-% | Ag |
| 0,004 Gew.-% - 0,005 Gew.-% | Al |
| 0,0034 Gew.-% - 0,0054 Gew.-% | La |
| Rest | Pb. |

### Ausführungsbeispiel 5 (erfindungsgemäß)

| | |
|---|---|
| 0,06 Gew.-% - 0,07 Gew.-% | Ca |
| 1,55 Gew.-% - 1,58 Gew.-% | Sn |
| 0,011 Gew.-% - 0,013 Gew.-% | Ag |
| 0,004 Gew.-% - 0,005 Gew.-% | Al |
| 0,0015 Gew.-% - 0,003 Gew.-% | La |
| 0,0015 Gew.-% - 0,003 Gew.-% | Ce |
| Rest | Pb. |

## Patentansprüche

1. Bleilegierung, insbesondere Elektrodengitterlegierung, bestehend aus:
| | |
|---|---|
| 0,06 Gew.-% - 0,07 Gew.-% | Ca |
| 1,55 Gew.-% - 1,58 Gew.-% | Sn |
| 0,011 Gew.-% - 0,013 Gew.-% | Ag |
| 0,004 Gew.-% - 0,005 Gew.-% | Al |
| 0,0015 Gew.-% - 0,003 Gew.-% | La |
| 0,0015 Gew.-% - 0,003 Gew.-% | Ce |
| Rest | Pb; |
wobei die Summe aller Gewichtsanteile der Legierungskomponenten in der Bleilegierung 100 Gew.-% beträgt.

2. Verwendung einer Bleilegierung gemäß Anspruch 1 als Material für ein Elektrodengerüst, insbesondere in Form eines Elektrodengitters, für Blei-Säure-Akkumulatoren.

3. Elektrode für einen Blei-Säure-Akkumulator, mit einem Elektrodengerüst, insbesondere einem Elektrodengitter, welches wenigstens teilweise aus einer Bleilegierung gemäß Anspruch 1 gebildet ist.

4. Elektrode gemäß Anspruch 3, **gekennzeichnet durch** eine pastöse aktive Elektrodenmasse, welche von dem Elektrodengerüst aufgenommen ist.

5. Blei-Säure-Akkumulator, insbesondere VRLA-Akkumulator, aufweisend eine Elektrode gemäß einem der Ansprüche 3 oder 4.

## Claims

1. Lead alloy, in particular electrode grid alloy, consisting of:
| | |
|---|---|
| 0.06 wt.% - 0.07 wt.% | Ca |
| 1.55 wt.% - 1.58 wt.% | Sn |
| 0.011 wt.% - 0.013 wt.% | Ag |
| 0.004 wt.% - 0.005 wt.% | Al |
| 0.0015 wt.% - 0.003 wt.% | La |
| 0.0015 wt.% - 0.003 wt.% | Ce |
| rest | Pb; |
wherein the sum of all weight percentages of the alloying components in the lead alloy amounts to 100 wt.%.

2. Use of a lead alloy according to claim 1 as a material for an electrode framework, in particular in the form of an electrode grid, for lead-acid accumulators.

3. Electrode for a lead-acid accumulator comprising an electrode framework, in particular an electrode grid, which is at least partially formed from a lead alloy according to claim 1.

4. Electrode according to claim 3, **characterized by** a pasty active electrode mass that is incorporated in the electrode framework.

5. Lead-acid accumulator, in particular VRLA accumulator, comprising an electrode according to any one of claims 3 or 4.

## Revendications

1. Alliage de plomb, en particulier alliage pour grille d'électrode, constitué de:
| | |
|---|---|
| 0,06 % en poids - 0,07 % en poids | Ca |
| 1,55 % en poids - 1,58 % en poids | Sn |
| 0,011 % en poids - 0,013 % en poids | Ag |
| 0,004 % en poids - 0,005 % en poids | Al |
| 0,0015 % en poids - 0,003 % en poids | La |
| 0,0015 % en poids - 0,003 % en poids | Ce |
| le reste | Pb; |
la somme de tous les pourcentages massiques des composants d'alliage dans l'alliage de plomb s'élevant à 100 % en poids.

2. Utilisation d'un alliage de plomb selon la revendication 1 en tant que matériau pour une armature d'électrode, en particulier sous la forme d'une grille d'électrode, pour des accumulateurs au plomb-acide.

3. Électrode pour un accumulateur au plomb-acide comprenant une armature d'électrode, en particulier une grille d'électrode, qui est au moins partiellement formée à partir d'un alliage de plomb selon la revendication 1.

4. Électrode selon la revendication 3, **caractérisée par** une masse d'électrode active pâteuse contenue dans l'armature d'électrode.

5. Accumulateur au plomb-acide, en particulier accumulateur VRLA, comprenant une électrode selon l'une quelconque des revendications 3 ou 4.
